# EUROPEAN PATENT APPLICATION

(11) **EP 4 597 212 A1**
(43) Date of publication of application: **06.08.2025**
(21) Application number: 23872075.9
(22) Date of filing: 20.09.2023
(51) Int. Cl.: G02F 1/1339, C09K 3/10, G02F 1/1341

(54) **CURABLE RESIN COMPOSITION FOR USE IN SEALING MATERIAL FOR FILM LIQUID CRYSTAL PANEL, AND FILM LIQUID CRYSTAL PANEL HAVING END SEALED BY SAID CURABLE RESIN COMPOSITION**

(30) Priority: 27.09.2022 JP 2022153885
(71) Applicant: NOF Corporation, Tokyo 150-6012 (JP)
(72) Inventor: KOMATSUZAKI,Satoru, Chita-gun, Aichi 470-2373 (JP)
(74) Representative: Hoffmann Eitle
(86) International application number: PCT/JP2023/034095
(87) International publication number: WO 2024/070847

(57) **Abstract**

This curable resin composition for use in a sealing material for film liquid crystal panels comprises (A) a polyfunctional thiol compound, (B) a polyfunctional urethane (meth)acrylate compound, (C) a polyfunctional (meth)allyl compound, (D) a monofunctional (meth)allyl compound, and (E) a photopolymerization initiator, wherein the (B)/[(C) + (D)] mass ratio is 0.1-1.0, the (C)/(D) mass ratio is 0.3-3.0, and the ratio (thiol group/polymerizable unsaturated bond) between the functional group concentration of the thiol groups in (A) and the total of the functional group concentrations of the polymerizable unsaturated bonds in (B) to (D) is 0.4-3.0. This curable resin composition exhibits an excellent usability while in an uncured condition, does not contaminate liquid crystals even when brought into contact with liquid crystals, and does not produce perturbations in liquid crystal alignment even when in contact with liquid crystals in a severe environment of heat and moisture. In addition, this curable resin composition can be used in a sealing material for film liquid crystal panels that exhibits an excellent shock resistance and an excellent adherence to film substrates.

## Description

### TECHNICAL FIELD

The present invention relates to a curable resin composition for use in a sealing material for a film liquid crystal panel. Specifically, the present invention relates to a curable resin composition for forming a sealing material for a film liquid crystal which has excellent usability in an uncured state, does not contaminate the liquid crystal even when the curable resin composition comes into contact with the liquid crystal, does not cause the alignment disorder of the liquid crystal even in a state where a cured product is in contact with the liquid crystal under harsh wet heat environment, in addition, has excellent adhesiveness to a curved film base material, and further has high impact resistance so as not to be peeled from the film base material even when an impact is applied. The present invention also relates to a film liquid crystal panel in which a sealing material including the curable resin composition is used.

### BACKGROUND ART

Liquid crystal panels are widely used for image display of various electronic devices such as mobile phones and personal computers. A liquid crystal panel usually includes a pair of glass base plates each having an electrode on the surface, a frame-shaped sealing material sandwiched between the glass base plates, and a liquid crystal layer surrounded by the sealing material.

Conventionally, a photocurable acrylic resin composition has been used as the sealing material.
However, the conventional acrylic resin composition is excellent in workability and productivity, but has a problem that a large amount of outgas is generated in the production process, and the adhesiveness between the sealing material and the base material is deteriorated. Though a sealing material is required to protect a liquid crystal under harsh wet heat environment, conventional sealing materials including an acrylic resin composition have a problem that the liquid crystal is contaminated by moisture and a decomposition product of the sealing material under wet heat environment due to the low moisture barrier property and easy decomposition of the sealing material, and the alignment of the liquid crystal is disordered.

For these problems, it is known that by using a resin composition containing a thiol monomer having a thiol group and an ene monomer having a carbon-carbon double bond, occurrence of outgassing can be suppressed to improve adhesiveness of a sealing material (Patent Documents 1 and 2). In Patent Documents 1 and 2, it has been also confirmed that the alignment disorder of the liquid crystal does not occur even in a state where the sealing material and the liquid crystal are in contact with each other under harsh wet heat environment due to the improvement in the moisture barrier property and durability of the sealing material.

However, in the production of a liquid crystal panel, there is a method that has a step in which a resin composition for use in a sealing material is brought into contact with a liquid crystal in an uncured state. In such a method, the sealing materials of Patent Documents 1 and 2 have a problem that the resin component is eluted in and contaminates the liquid crystal, and display defects occur.

In recent years, a film liquid crystal panel in which a flexible film material is used as a base material has attracted attention, and has been developed. Unlike sealing materials used for a rigid glass base plate, sealing materials used for this film liquid crystal panel are required to be flexible and tough, and have high adhesiveness to a curved film base material. However, in the sealing materials of Patent Documents 1 and 2, flexibility and toughness are not compatible, and the adhesiveness to a curved film base material is insufficient.

In view of these problems, it is known that by using a resin composition containing a polyfunctional thiol compound, a polyfunctional urethane (meth)acrylate compound, and a polyfunctional (meth)allyl compound, contamination of the liquid crystal is suppressed and alignment disorder of the liquid crystal does not occur even when the curable resin composition is brought into contact with the liquid crystal in an uncured state (Patent Document 3). The curable resin composition of Patent Document 3 has high flexibility and toughness after curing, and is an sealing material excellent in followability to a film base material.

### PRIOR ART DOCUMENTS

### PATENT DOCUMENTS

Patent Document 1: JP-A-2016-169298
Patent Document 2: JP-A-2017-54084
Patent Document 3: JP-A-2021-162680

### SUMMARY OF THE INVENTION

### PROBLEMS TO BE SOLVED BY THE INVENTION

Since an electronic device in which a film liquid crystal panel is used may be carried by a user for use, the sealing material of a film liquid crystal panel is required to have impact resistance so as not to be peeled from the film base material even when a strong impact is applied. From the viewpoint of workability and productivity, the resin composition for use in a sealing material is also required to be stable without being gelled for a long time in an uncured state and to have high usability. However, the curable resin composition of Patent Document 3 does not have sufficient usability in an uncured state, and there is also room for improvement in impact resistance.

The present invention has been achieved in view of the above circumstances, and an object of the present invention is to provide a curable resin composition for use in a sealing material for a film liquid crystal panel which has excellent usability in an uncured state of the curable resin composition, does not contaminate the liquid crystal even when the curable resin composition comes into contact with the liquid crystal, does not cause the alignment disorder of the liquid crystal even in a state where a cured product is in contact with the liquid crystal under harsh wet heat environment, in addition, has excellent adhesiveness to a curved film base material, and further has high impact resistance so as not to be peeled from the film base material even when an impact is applied and to provide a film liquid crystal panel including the curable resin composition as a sealing material.

### MEANS FOR SOLVING THE PROBLEMS

To solve the above problems, the present inventors have conducted intensive studies, and found that by combining a specific polyfunctional urethane (meth)acrylate compound, a specific polyfunctional (meth)allyl compound, and a specific monofunctional (meth)allyl compound, and further using a curable resin composition containing a polyfunctional thiol compound, a sealing material for a film liquid crystal panel which has excellent usability in an uncured state, does not contaminate the liquid crystal even when the sealing material comes into contact with the liquid crystal, and further does not cause the alignment disorder of the liquid crystal even in a state where a cured product is in contact with the liquid crystal under harsh wet heat environment can be obtained. The present inventors have found that this sealing material has both flexibility and toughness, is excellent in adhesiveness to a curved film base material, and further has high impact resistance so as not to be peeled from the film base material even when an impact is applied, and have completed the present invention.

That is, the present invention is the following [1] to [2].
[1] A curable resin composition for use in a sealing material for a film liquid crystal panel, containing the following components (A) to (D):
   (A) a polyfunctional thiol compound having 2 to 6 thiol groups;
   (B) a polyfunctional urethane (meth)acrylate compound having 2 to 3 (meth)acrylic groups;
   (C) a polyfunctional (meth)allyl compound having 2 to 4 (meth)allyl groups;
   (D) a monofunctional (meth)allyl compound having one (meth)allyl group; and
   (E) a photopolymerization initiator,

   wherein a blending mass ratio (B)/[(C)+(D)] of (B) to (C) and (D) is 0.1 to 1.0,
   a blending mass ratio (C)/(D) of (C) to (D) is 0.3 to 3.0, and
   a ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is 0.4 to 3.0.
[2] A film liquid crystal panel having an end sealed by the curable resin composition according to [1] above.

In the present invention, the "(meth)allyl compound" means a generic term including both a compound having an allyl group and a compound having a methallyl group, and the same applies to the "(meth)acrylic group" and the like. In the present invention, "oo to ××" indicating a numerical range is a concept including a lower limit value ("oo") and an upper limit value ("××") thereof unless otherwise specified. That is, it means exactly "oo or more and ×× or less".

### EFFECT OF THE INVENTION

According to the present invention, a curable resin composition for use in a sealing material for a film liquid crystal panel which has excellent usability in an uncured state, does not contaminate the liquid crystal even when the curable resin composition comes into contact with the liquid crystal, does not cause the alignment disorder of the liquid crystal even in a state where a cured product is in contact with the liquid crystal under harsh wet heat environment, in addition, has excellent adhesiveness to a curved film base material, and further has high impact resistance so as not to be peeled from the film base material even when an impact is applied can be provided. There is also provided a film liquid crystal panel including the curable resin composition as a sealing material.

### MODE FOR CARRYING OUT THE INVENTION

Hereinafter, the present invention will be described in detail. The curable resin composition of the present invention is used for a sealing material for a film liquid crystal panel, and contains the following (A), (B), (C), (D), and (E) as essential components.

### <Polyfunctional thiol compound (A)>

The polyfunctional thiol compound (A) is a compound having 2 to 6 thiol groups. The polyfunctional thiol compound (A) can be used alone or in combination of two or more types thereof. By such a compound being contained, the thiol-ene reaction proceeds with other components, and curability can be increased. The formed thioether bond can flexibly change the bond angle as compared with a bond of an atom such as C, O, or N, thus the cured product has high flexibility, and the adhesiveness of the sealing material to a curved film base material and the impact resistance can be increased. A cured product formed of the thioether bond has a high bond angle flexibility, and can be cured at a high density so that atoms fill gaps between bonds. Therefore, the cured product has a high moisture barrier property, and can prevent the alignment disorder of the liquid crystal without being affected by moisture even after a wet heat test.

The polyfunctional thiol compound (A) is preferably a compound represented by the following Formula 1. 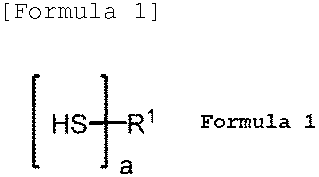 (In the formula, a is an integer of 2 to 6, and R¹ is a 2 to 6 valent organic group having 10 to 60 carbon atoms.)

In the formula, a is preferably an integer of 3 to 6 from the viewpoint of increasing the moisture barrier property of a sealing material for a film liquid crystal panel and suppressing the alignment disorder even under exposure to a harsh wet heat test. When a in the formula is within this range, shrinkage on curing does not increase, the adherence to the film base material after curing does not decrease, and a good cured product is obtained. From the same viewpoint, R¹ is preferably 3 to 6 valent. The carbon number of R¹ is 10 to 60, preferably 10 to 45, more preferably 12 to 30. When the carbon number of R¹ is within this range, the crosslinking density of the cured product of the curable resin composition is sufficient, the sealing material is excellent in the moisture barrier property, and the alignment disorder of the liquid crystal can be suppressed even under exposure to a harsh wet heat test.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, an isocyanurate group, or a glycoluril can be also contained.

Specific examples of the polyfunctional thiol compound (A) include dipentaerythritol hexakis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(2-mercaptoethylthiomethyl)methane, tetrakis(3-mercaptopropylthiomethyl)methane, 1,3,5-tris(mercaptoethyleneoxy)benzene, and tris-[(3-mercaptopropionyloxy)-ethyl]-isocyanurate.

Among the compounds represented by the Formula 1 above, polyfunctional thiols having a pentaerythritol skeleton, polyfunctional thiols having a dipentaerythritol skeleton, and polyfunctional thiols having an isocyanurate skeleton are preferable.

Among them, dipentaerythritol hexakis(3-mercaptopropionate), pentaerythritol tetrakis(3-mercaptopropionate), and tris-[(3-mercaptopropionyloxy)-ethyl]-isocyanurate are preferable because the moisture barrier property of the sealing material can be increased, the alignment disorder of the liquid crystal can be suppressed even under exposure to a harsh wet heat test, the flexibility of the cured product of the curable resin composition can be increased, and the adhesiveness of the sealing material to the base material and the impact resistance can be increased.

As the polyfunctional thiol compound (A), a commercially available product can be used, or a synthesized product can be used. As the synthesis method, for example, the polyfunctional thiol compound (A) can be obtained by esterifying a polyhydric alcohol such as pentaerythritol with a mercapto group-containing carboxylic acid such as 3-mercaptopropionic acid by a known method.

### <Polyfunctional urethane (meth)acrylate compound (B)>

The polyfunctional urethane (meth)acrylate compound (B) is obtained by reacting a diisocyanate compound, a polyol compound, and a (meth)acrylate compound having a hydroxyl group by a known method. The polyfunctional urethane (meth)acrylate compound (B) can be used alone or in combination of two or more types thereof. Such a compound has a high lyophobic property with the liquid crystal, and thus when such a compound is contained, the solubility of the uncured curable resin composition in the liquid crystal is reduced, and contamination of the liquid crystal can be prevented even when the curable resin composition comes into contact with the liquid crystal for a long period of time. Due to strong interaction such as hydrogen bonding between contained urethane groups and between contained urethane groups and other polar groups, the cured product of the curable resin composition exhibits toughness and adhesion to the base, and the adhesiveness of the sealing material to a curved film base material and the impact resistance can be increased. The polyfunctional urethane (meth)acrylate compound (B) is a compound having 2 to 3 (meth)acrylic groups, and when the number of (meth)acrylic groups is in this range, the cured product of the curable resin composition does not become rigid, and the adhesiveness of the sealing material to a curved film base material and the impact resistance can be increased.

As the diisocyanate compound, a known compound can be used. Examples thereof include an aliphatic diisocyanate, an alicyclic diisocyanate, and an aromatic diisocyanate. Specific examples thereof include aliphatic diisocyanates such as pentamethylene diisocyanate, hexamethylene diisocyanate, and trimethylhexamethylene diisocyanate; alicyclic diisocyanates such as isophorone diisocyanate, hydrogenated diphenyl diisocyanate, and norbornene diisocyanate; and aromatic diisocyanates such as xylylene diisocyanate, tolylene diisocyanate, and diphenylmethane diisocyanate. Among them, aliphatic and alicyclic diisocyanates are preferable from the viewpoint of preventing coloring of the resulting sealing material over time.

As the polyol compound, a known compound can be used. Examples thereof include a polyester polyol, a polyether polyol, a polycarbonate polyol, and a polyol composed of a hydrocarbon. The polyol compound is preferably a divalent diol compound or a trivalent triol compound from the viewpoint that the polarity of the polyfunctional urethane acrylate compound obtained after the reaction does not become too high and the adhesiveness of the sealing material to a curved film base material and the impact resistance can be increased.

As the polyester polyol, a compound obtained by condensation reaction of a dicarboxylic acid compound and a polyol compound can be used. Specific examples of the dicarboxylic acid compound include succinic acid, adipic acid, pimelic acid, and sebacic acid. Among them, adipic acid and pimelic acid are preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyether polyol, a known compound can be used. Specific examples thereof include diol compounds such as polyethylene glycol, polypropylene glycol, polybutylene glycol, and polytetramethylene glycol, and triol compounds such as polyoxypropylene triol and polyoxyethylene polyoxypropylene triol. Among them, polyethylene glycol, polypropylene glycol, and polyoxypropylene triol are preferable.

As the polycarbonate polyol, a compound obtained by transesterification of a carbonic acid diester and a polyol compound can be used. Specific examples of the carbonic acid diester include diphenyl carbonate, dimethyl carbonate, and diethylene carbonate. Among them, diphenyl carbonate is preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyol composed of a hydrocarbon, a known compound can be used. Specific examples thereof include diol compounds such as ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, and 1,8-octanediol, and triol compounds such as glycerin, 1,2,4-butanetriol, and trimethylolpropane. Among them, 1,5-pentanediol, 3-methyl-1,5-pentanediol, 1,6-hexanediol, and glycerin are preferable.

As the (meth)acrylate compound having a hydroxyl group, a known compound can be used. Specifically, 2-hydroxyethyl (meth)acrylate, 2-hydroxypropyl (meth)acrylate, 4-hydroxybutyl (meth)acrylate, 4-hydroxycyclohexyl (meth)acrylate, 5-hydroxycyclooctyl (meth)acrylate, 2-hydroxy-3-phenyloxypropyl (meth)acrylate, propylene glycol monoacrylate, polyethylene glycol mono(meth)acrylate, polypropylene glycol mono(meth)acrylate and the like can be used. Among them, 2-hydroxyethyl acrylate and propylene glycol monoacrylate are preferable from the viewpoint that coloring of the sealing material over time can be prevented, the flexibility of the cured product of the curable resin composition can be increased, and the adhesiveness of the sealing material to a curved film base material and the impact resistance can be increased.

The weight average molecular weight of the polyfunctional urethane (meth)acrylate compound (B) is preferably 1,000 to 15,000, and more preferably 3,000 to 10,000 from the viewpoint of simultaneously achieving performances of not contaminating the liquid crystal even in cases where the curable resin composition in an uncured state comes into contact with the liquid crystal, suppressing the alignment disorder of the liquid crystal even in cases where the sealing material is exposed to a harsh wet heat test, and having excellent adhesiveness to a curved film base material and the impact resistance, and also from the viewpoint of easy handling of the compound itself. The weight average molecular weight of the urethane (meth)acrylate is determined by gel permeation chromatography (GPC) using a calibration curve of standard polystyrene.

### <Polyfunctional (meth)allyl compound (C)>

The polyfunctional (meth)allyl compound (C) is a compound having 2 to 4 (meth)allyl groups. The polyfunctional (meth)allyl compound (C) can be used alone or in combination of two or more types thereof. Because the polymerization reaction between (meth)allyl compounds does not proceed, (meth)allyl compounds can efficiently form a thioether bond with a thiol compound. Thus, by (C) being contained, the crosslinking density can be improved, the toughness of the cured product of the curable resin composition can be increased, and the adhesiveness of the sealing material to a curved film base material can be increased. The sealing material has an excellent moisture barrier property, and further, hydrolysis is less likely to occur in a moisture resistance test as compared with (meth)acrylic compounds. Therefore, it is possible to maintain the high moisture barrier property of the sealing material in the moisture resistance test, and suppress the alignment disorder of the liquid crystal even under exposure to a harsh wet heat test.

The polyfunctional (meth)allyl compound (C) is preferably a compound represented by the following Formula 2. 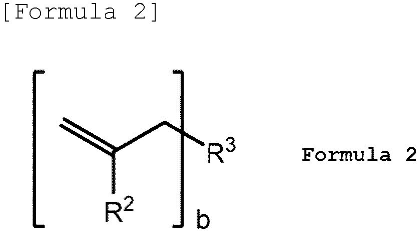 (In the formula, b is an integer of 2 to 4. R² is a hydrogen atom or a methyl group. R³ is a 2 to 4 valent organic group having 2 to 40 carbon atoms.)

R² in the formula is a hydrogen atom or a methyl group, and is preferably a hydrogen atom from the viewpoint of increasing the flexibility of the cured product of the curable resin composition and increasing the adhesiveness of the sealing material to the base material. b is an integer of 2 to 4, and when b is in this range, the moisture barrier property of the sealing material can be increased, the alignment disorder can be suppressed even under exposure to a harsh wet heat test, the toughness of the cured product of the curable resin composition can be increased, and the adhesiveness of the sealing material to a curved film base material can be increased. b is preferably 2 to 3, and b is more preferably 2 from the viewpoint that the flexibility can be improved and the impact resistance of the sealing material can be increased while maintaining the high moisture barrier property of the cured product of the curable resin composition and the adhesiveness of the sealing material to the film base material. Also, from the same viewpoint, R³ is 2 to 4 valent, preferably 2 to 3 valent, more preferably 2 valent. The carbon number of R³ is 2 to 40, preferably 2 to 30, and more preferably 2 to 25. When the carbon number of R²³ is within this range, the crosslinking density of the cured product of the curable resin composition is sufficient, the sealing material has a good moisture barrier property, and the alignment disorder can be suppressed even under exposure to a harsh wet heat test.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, or an isocyanurate group can be also contained.

Specific examples of the compound in which b in the formula is 2 include 1,4-cyclohexanedicarboxylic acid di(meth)allyl ester, isophthalic acid di(meth)allyl ester, phthalic acid di(meth)allyl ester, hexahydrophthalic acid di(meth)allyl ester, di(meth)allylmethylglycidyl isocyanurate, magnolol, di(meth)allyldiphenylsilane, trimethylolpropane (meth)allyl ether, 2,2'-bis(3-(meth)allyl-4-ydroxyphenyl)propane, 2,2-bis(3-(meth)allyl-4-allyloxyphenyl)propane, 2,2-bis(3-(meth)allyl-4-glycidyloxyphenyl)propane, 1,3-di(meth)allyl-5-glycidyl isocyanurate, and 1,3-di(meth)allyl cyanurate.

Specific examples of the compound in which b is 3 include triallyl isocyanurate, pentaerythritol tri(meth)allyl ether, glycerin tri(meth)allyl ether, and trimethylolpropane triallyl ether.

Specific examples of the compound in which b is 4 include 1,3,4,6 tetra(meth)allyl glycoluril, 1,3,4,6 tetra(meth)allyl-3a-methylglycoluril, pentaerythritol tetra(meth)allyl ether, and tetra(meth)allyloxyethane.

Among the (meth)allyl compounds, a (meth)allyl compound having an isocyanurate skeleton, a (meth)allyl compound having a pentaerythritol skeleton and the like are preferable from the viewpoint that coloring of the sealing material over time can be prevented, the moisture barrier property of the sealing material can be increased, the alignment disorder can be suppressed even under exposure to a harsh wet heat test, further, the toughness of the cured product of the curable resin composition can be increased, and the adhesiveness to a curved film base material can be increased. Among them, specifically, 1,3-diallyl-5-glycidyl isocyanurate, triallyl isocyanurate, pentaerythritol triallyl ether, and pentaerythritol tetraallyl ether are preferable.

### <Monofunctional (meth)allyl compound (D)>

The monofunctional (meth)allyl compound (D) is a compound having one (meth)allyl group. The monofunctional (meth)allyl compound (D) can be used alone or in combination of two or more types thereof. By (D) being contained, the flexibility can be greatly improved and the impact resistance of the sealing material can be increased while maintaining the toughness and the high moisture barrier property of the cured product of the curable resin composition. The degree of crosslinking in the curing reaction of the curable resin composition can be adjusted, the degree of the viscosity increase of the uncured product of the curable resin composition can be suppressed, and the usability of the curable resin composition can be improved.

The monofunctional (meth)allyl compound (D) is preferably a compound represented by the following Formula 3. 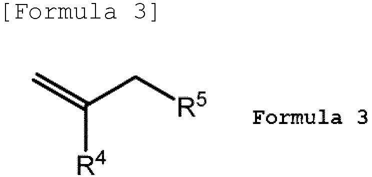 R⁴ in the formula is a hydrogen atom or a methyl group. R⁵ is an organic group having 2 to 20 carbon atoms.)

R⁴ in the formula is a hydrogen atom or a methyl group, and is preferably a hydrogen atom from the viewpoint of increasing the flexibility of the cured product of the curable resin composition and increasing the impact resistance of the sealing material. The carbon number of R⁵ is preferably 2 to 15, more preferably 5 to 15. When the carbon number of R⁵ is within this range, the usability in an uncured state of the curable resin composition can be increased while maintaining the flexibility of the cured product of the curable resin composition and the high impact resistance of the sealing material.

The organic group is a group that contains C and can further contain at least one element selected from the group consisting of Si, N, P, O, and S. The organic group can be a polymer having a repeating unit. In the structure, a group such as a ketone group, an ester group, an ether group, a thioether group, or an isocyanurate group can be also contained.

Specific examples thereof include methyl (meth)allyl ether, ethyl (meth)allyl ether, butyl (meth)allyl ether, octyl (meth)allyl ether, benzyl (meth)allyl ether, phenyl (meth)allyl ether, (meth)allyl methyl sulfide, (meth)allylcyclohexane, (meth)allyl acetate, (meth)allyl hexanoate, (meth)allyloxytetrahydropyran, (meth)allyl glycidyl ether, and 1-(meth)allyl-3,5-diglycidyl isocyanurate.

Among the (meth)allyl compounds, 1-allyl-3,5-diglycidyl isocyanurate is preferable from the viewpoint that coloring of the sealing material over time can be prevented, the flexibility of the cured product of the curable resin composition can be increased, and the impact resistance of the sealing material can be increased.

The molecular weight of the monofunctional (meth)allyl compound (D) is preferably 200 to 1,000 from the viewpoint of excellent usability in an uncured state of the curable resin composition and increasing the impact resistance of the sealing material.

### <Photopolymerization initiator (E)>

When (A) above, (B) above, (C) above, (D) above, and other polymerizable compounds are added, a photopolymerization initiator (E) is added to accelerate a curing reaction of the polymerizable compounds by light, and thereby light irradiation required for curing the curable resin composition can be reduced. The photopolymerization initiator (E) can be used alone or in combination of two or more types thereof. Examples of the photopolymerization initiator include a photoradical polymerization initiator, a photocationic polymerization initiator, and a photoanionic polymerization initiator. Among them, a photoradical polymerization initiator is preferable from the viewpoint of shortening the reaction time and improving the productivity.

Examples of the photoradical polymerization initiator include 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one, 2-methyl-1-[4-(methylthio)phenyl]-2-morpholinopropan-1-one, bis(2,4,6-trimethylbenzoyl)-phenylphosphine oxide, 2,4,6-trimethylbenzoyl-diphenylphosphine oxide, 1,2-octanedione-1-[4-(phenylthio)phenyl]-2-(O-benzoyloxime), and 1-[9-ethyl-6-(2-methylbenzoyl)-9H-carbazol-3yl]ethanone-1-(O-acetyloxime) .

Examples of the photocationic polymerization initiator include bis(4-tert-butylphenyl)iodonium hexafluorophosphate, bis(4-tert-butylphenyl)iodonium trifluoromethanesulfonate, cyclopropyl diphenylsulfonium tetrafluoroborate, diphenyliodonium hexafluorophosphate, diphenyliodonium hexafluoroarsenate, 2-(3,4-dimethoxystyryl)-4,6-bis(trichloromethyl)-1,3,5-triazine, triphenylsulfonium tetrafluoroborate, triphenylsulfonium bromide, tri-p-tolylsulfonium hexafluorophosphate, and tri-p-tolylsulfonium trifluoromethanesulfonate.

Examples of the photoanionic polymerization initiator include acetophenone o-benzoyloxime, nifedipine, 2-(9-oxoxanthen-2-yl)propionic acid 1,5,7-triazabicyclo[4,4,0]dec-5-ene, 2-nitrophenylmethyl 4-methacryloyloxypiperidine-1-carboxylate, 1,2-diisopropyl-3-[bis(dimethylamino)methylene]guanidinium 2-(3-benzoylphenyl)propionate, and 1,2-dicyclohexyl-4,4,5,5,-tetramethylbiguanidinium n-butyltriphenylborate.

### <Spherical filler (F)>

The curable resin composition of the present invention can contain a spherical filler (F) as long as the object of the present invention is not hindered. The spherical filler (F) preferably has an average particle diameter of 15 µm or less, more preferably 10 µm or less. When the average particle diameter is in this range, the flexibility and the toughness of the curable resin composition are not impaired, and the adhesiveness of the sealing material to a curved film base material and the impact resistance can be maintained. The average particle diameter can be measured with a commercially available particle diameter distribution measuring apparatus such as Microtrac MT-3000II manufactured by MicrotracBEL Corp.

Examples of the spherical filler (F) formed of an inorganic substance include silica, silicon carbide, calcium carbonate, magnesium carbonate, alumina, titania, calcium oxide, magnesium oxide, magnesium hydroxide, and aluminum hydroxide. Among them, silica is preferable from the viewpoint that the moisture barrier property of the sealing material is not impaired, and the shape stability can be improved while maintaining the performance of suppressing the alignment disorder even under exposure to a harsh wet heat test.

Examples of the spherical filler (F) formed of an organic substance include acrylic particles, urethane particles, styrene particles, melamine particles, and acryl-styrene particles. Among them, acrylic particles and urethane particles are preferable from the viewpoint that the flexibility and the toughness of the curable resin composition are not impaired, and the adhesiveness of the sealing material to a curved film base material and the impact resistance can be maintained.

These spherical fillers can be used alone or in combination of two or more types thereof.

The true density of the spherical filler (F) is preferably 1.1 to 4.0, more preferably 1.2 to 3.0 from the viewpoint that the flexibility and the toughness of the curable resin composition are not impaired, and the adhesiveness of the sealing material to a curved film base material and the impact resistance can be maintained. The true density can be measured with a commercially available pycnometer such as Ultrapyc1200e manufactured by Quantachrome Instruments Japan G.K.

The content of the spherical filler (F) in the curable resin composition of the present invention is preferably 0.5 to 50 parts by mass, more preferably 1 to 40 parts by mass relative to a total of 100 parts by mass of (A); (B); and (C) and (D).

### <Other components>

The curable resin composition of the present invention can contain additives such as a polymerizable compound such as a (meth)acrylic compound or an epoxy compound, a surfactant, a silane coupling agent, a curing accelerator, an ultraviolet absorber, a light stabilizer, an antioxidant, a polymerization inhibitor, a leveling agent, an adhesion imparting agent, a plasticizer, an antifoaming agent, a light shielding material, a conductive material, a spacer, and a shape stabilizer as long as the object of the present invention is not hindered.

### <Composition ratio (blending ratio)>

In the curable resin composition of the present invention, the thiol-ene reaction proceeds between thiol groups of the polyfunctional thiol compound (A) and polymerizable unsaturated bonds of the polyfunctional urethane (meth)acrylate compound (B), the polyfunctional (meth)allyl compound (C), and the monofunctional (meth)allyl compound (D), thereby a cured product can be obtained, blending is performed so that the blending mass ratio (B)/[(C) + (D)] of (B) to (C) and (D) is 0.1 to 1.0, a blending mass ratio (C)/(D) of (C) to (D) is 0.3 to 3.0, and a ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is 0.4 to 3.0, and thus, the curable resin composition has excellent usability in an uncured state, does not contaminate the liquid crystal even when the curable resin composition comes into contact with the liquid crystal, does not cause the alignment disorder of the liquid crystal even in a state where the sealing material including the cured product of the curable resin composition is in contact with the liquid crystal under harsh wet heat environment, in addition, has excellent adhesiveness to a curved film base material, and further has high impact resistance so as not to be peeled from the film base material even when an impact is applied. The functional group concentration of the thiol groups is a number represented by parts by mass of (A) in a total of 100 parts by mass of (A); (B); and (C) and (D) × the number of functional groups of thiol groups of (A)/the molecular weight of (A), and the sum of a functional group concentration of a polymerizable unsaturated bond of (B) and a functional group concentration of a polymerizable unsaturated bond of (C) is a number represented by [parts by mass of (B) in a total of 100 parts by mass of (A); (B); and (C) and (D) × number of (meth)acrylic groups of (B)/molecular weight of (B)] + [parts by mass of (C) in a total of 100 parts by mass of (A); (B); and (C) and (D) × number of allyl groups of (C)/molecular weight of (C)] + [parts by mass of (D) in a total of 100 parts by mass of (A); (B); and (C) and (D) × number of allyl groups of (D)/molecular weight of (D)]. Thus, the curable resin composition of the present invention cannot lack any of (A), (B), (C), and (D). By further using (E) above for the curable resin composition containing (A), (B), (C), and (D), the curable resin composition can be cured only by light irradiation to exhibit the above effects. In addition, by (B) which has high polarity and is likely to interpose a strong interaction such as a hydrogen bond being contained, the stringiness is enhanced in an uncured state of the cured resin composition, and the usability is deteriorated, but by (D) being contained in the cured resin composition of the present invention, the stringiness is reduced and the usability can be maintained.

The curable resin composition of the present invention preferably contains 5 parts by mass or more of (B), more preferably contains 10 parts by mass or more of (B) in a total of 100 parts by mass of (A); (B); and (C) and (D) in order to increase a liquid crystal non-contaminating property, not to contaminate the liquid crystal even in cases where the curable resin composition in an uncured state comes into contact with the liquid crystal, to increase the toughness and the adhesion to the base of the cured product of the curable resin composition, and to increase the adhesiveness of the sealing material to a curved film base material and the impact resistance. The curable resin composition of the present invention preferably contains 35 parts by mass or less of (B), more preferably contains 20 parts by mass or less of (B) in a total of 100 parts by mass of (A); (B); and (C) and (D) in order to reduce the stringiness of the curable resin composition and achieve excellent usability in an uncured state, increase the moisture barrier property of the cured product of the curable resin composition, and suppress the alignment disorder of the sealing material under a harsh wet heat test. That is, the curable resin composition preferably contains 5 parts by mass or more and 35 parts by mass or less of (B), more preferably contains 10 parts by mass or more and 20 parts by mass or less of (B) in a total of 100 parts by mass of (A); (B); and (C) and (D) in order to simultaneously achieve performances of excellent usability of the curable resin composition in an uncured state, not contaminating the liquid crystal even in cases where the curable resin composition comes into contact with the liquid crystal, suppressing the alignment disorder of the liquid crystal even in cases where the sealing material is exposed to a harsh wet heat test, excellent adhesiveness of the sealing material to a curved film base material, and the high impact resistance of the sealing material at a higher level.

In the curable resin composition of the present invention, the blending mass ratio (B)/[(C)+(D)] of (B) to (C) and (D) is preferably 0.2 to 0.7 in order to suppress the degree of the viscosity increase and stringiness and achieve excellent usability in an uncured state, the blending mass ratio (B)/[(C)+(D)] of (B) to (C) and (D) is preferably 0.6 or less in order to increase the moisture barrier property of the cured product of the curable resin composition and further suppress the alignment disorder of the sealing material under a harsh wet heat test, the blending mass ratio (B)/[(C)+(D)] of (B) to (C) and (D) is preferably 0.2 or more in order to increase the toughness of the cured product of the curable resin composition and achieve more excellent adhesiveness of the sealing material to a curved film base material, and the blending mass ratio (B)/[(C)+(D)] of (B) to (C) and (D) is preferably 0.3 or more in order to increase the flexibility of the cured product of the curable resin composition and further increase the impact resistance of the sealing material, that is, the blending mass ratio (B)/[(C)+(D)] of (B) to (C) and (D) is preferably 0.3 to 0.6 in order to simultaneously achieve performances of excellent usability of the curable resin composition in an uncured state, suppressing the alignment disorder of the liquid crystal even in cases where the sealing material is exposed to a harsh wet heat test, excellent adhesiveness of the sealing material to a curved film base material, and the high impact resistance of the sealing material at a higher level.

Further, in the curable resin composition of the present invention, the blending mass ratio (C)/(D) of (C) to (D) is preferably 2.6 or less in order to suppress the degree of the viscosity increase in an uncured state and stringiness, and achieve excellent usability, the blending mass ratio (C)/(D) of (C) to (D) is preferably 0.5 or more in order to increase the moisture barrier property of the cured product of the curable resin composition and further suppress the alignment disorder of the sealing material under a harsh wet heat test, and increase the toughness of the cured product of the curable resin composition and achieve more excellent adhesiveness to a curved film base material, and the blending mass ratio (C)/(D) of (C) to (D) is preferably 2.4 or less in order to increase the flexibility of the cured product of the curable resin composition and further increase the impact resistance of the sealing material, that is, the blending mass ratio (C)/(D) of (C) to (D) is preferably 0.5 to 2.4 in order to simultaneously achieve performances of excellent usability of the curable resin composition in an uncured state, suppressing the alignment disorder of the liquid crystal even in cases where the sealing material is exposed to a harsh wet heat test, excellent adhesiveness of the sealing material to a curved film base material, and the high impact resistance of the sealing material at a higher level.

In addition, in the curable resin composition of the present invention, the ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is preferably 0.7 to 2.3 in order to increase the moisture barrier property of the cured product of the curable resin composition and further suppress the alignment disorder of the sealing material under a harsh wet heat test, the ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is preferably 0.7 to 2.5 in order to increase the toughness of the cured product of the curable resin composition and achieve excellent adhesiveness to a curved film base material, and the ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is preferably 0.7 or more in order to increase the flexibility of the cured product of the curable resin composition and further increase the impact resistance of the sealing material, that is, the ratio of a functional group concentration of thiol groups of (A) to a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is preferably 0.7 to 2.3 in order to simultaneously achieve performances of suppressing the alignment disorder of the liquid crystal even in cases where the sealing material is exposed to a harsh wet heat test, excellent adhesiveness of the sealing material to a curved film base material, and the high impact resistance of the sealing material at a higher level.

In the curable resin composition of the present invention, the ratio of (E) to a total of 100 parts by mass of (A); (B); and (C) and (D) is preferably 0.01 to 10.0 parts by mass, and more preferably 0.1 to 10.0 parts by mass. When the content of (E) is within the above range, a sealing material that does not cause the alignment disorder of the liquid crystal even in a state where the sealing material is in contact with the liquid crystal under harsh wet heat environment, in addition, is excellent in adhesiveness to a curved film base material, and has high impact resistance can be obtained.

### <Film liquid crystal panel>

Examples of the film liquid crystal panel of the present invention include a light control member that only controls transparency and opacity by liquid crystal alignment and a display element that displays images such as a display. The film liquid crystal panel of the present invention is, for example, one in which a pair of base plates is arranged so that the base plates face each other, the periphery is sealed with a sealing material for a film liquid crystal panel, and a liquid crystal material exists therebetween. The base plates are those in which a silver or copper electrode or a transparent electrode such as ITO or PEDOT is applied on a plastic transparent film base material such as polyethylene terephthalate, polycarbonate, a cycloolefin (co)polymer, PMMA, or polyimide. An alignment film or the like may be further formed on the transparent electrode.

The film liquid crystal panel of the present invention is a liquid crystal panel formed of a base plate in which the plastic transparent film base material is used, and the sealing material for a film liquid crystal panel is a sealing material used for the film liquid crystal panel.

### <Formation of film liquid crystal panel>

The film liquid crystal panel of the present invention is formed by applying the curable resin composition of the present invention to one of the pair of base plates, then dropping the liquid crystal inside the curable resin composition, and superposing the other base plate thereon with a liquid crystal interposed therebetween, and irradiating light to cure the curable resin composition. The film liquid crystal panel of the present invention is also formed by applying a polymer dispersed liquid crystal containing a liquid crystal and a curable resin composition to one of the pair of base plates, superposing the other base plate thereon, irradiating light to cure the polymer dispersed liquid crystal, then applying the curable resin composition of the present invention to the outer periphery, and irradiating light to cure the curable resin composition.

The method for applying the curable resin composition is not particularly limited, and for example, a method using coating equipment such as dispenser coating, an inkjet method, or a screen printing method, or a method of manually applying the curable resin composition with a syringe or a brush is applied.

The light source for irradiating the curable resin composition with light is not particularly limited, and for example, a mercury lamp such as a high-pressure mercury-vapor lamp or an ultra-high pressure mercury lamp, a black light lamp, an LED lamp, a halogen lamp, an electrodeless lamp, a xenon lamp, a mercury fluorescent lamp, an LED fluorescent lamp, sunlight, an electron beam irradiation instrument or the like is applied.

The contamination of the film liquid crystal panel can also be evaluated by measuring the voltage holding ratio, in addition to the method of forming the film liquid crystal panel and actually applying a voltage to confirm the alignment state as described above. The voltage holding ratio is an evaluation method in which a voltage is applied to a liquid crystal cell to check how much charged electric charge is held after a certain period of time. When the liquid crystal is contaminated, the electric charge is not held, and the voltage holding ratio decreases. The good voltage holding ratio without contamination is 90% or more, and preferably 95% or more.

### EXAMPLES

The present invention will be described more specifically with reference to Examples and Comparative Examples.

### <Evaluation method>

The performance of each curable resin composition in Examples and Comparative Examples was evaluated by the method described below.

### <Usability of curable resin composition>

Each curable resin composition produced in Examples and Comparative Examples was filled in a UV block syringe (PSY-20FU-OR manufactured by Musashi Engineering, Inc.) capable of blocking visible light, and was allowed to stand in a room at 25°C for 5 days. Then, the syringe was placed on a dispenser (SHOTMASTER manufactured by Musashi Engineering, Inc.), the curable resin composition was applied onto a 40 mm × 45 mm glass base plate (RT-DM 88-PIN manufactured by EHC. Co., Ltd.) on which a transparent electrode and an alignment film were applied in this order on glass at 3 points at intervals of 1 cm in a circular shape having a diameter of 2 mm for 9 seconds (3 seconds per point) using the dispenser, and the applied points were visually observed. Those that can be applied and, further, can be applied without shrinkage or protrusion from the circular shape having a diameter of 2 mmΦ were evaluated as a curable resin composition having high usability, and the results are described in tables.

⊚: The curable resin composition can be applied, and the curable resin composition can be applied in a circular shape having a diameter of 2 mm without shrinkage or protrusion at all three points.

∘: The curable resin composition can be applied, but shrinkage and/or protrusion from a circular shape having a diameter of 2 mm is observed at any one or more of the three points.

×: The curable resin composition is gelled in the syringe and cannot be applied.

### <Liquid crystal non-contaminating property>

To a sample bottle, 0.025 g of the curable resin composition was added, 1 g of a liquid crystal (MLC-7021-000 manufactured by Merck Corporation) was further added, and the sample bottle was allowed to stand at 25°C for 1 hour. Thereafter, ultraviolet irradiation (1,000 mJ/cm²) was performed using a high-pressure mercury-vapor lamp to cure the curable resin composition, and the mixture was heated at 100°C for 2 hours. After 2 hours, the cured product and the liquid crystal were separated with a centrifuge, and the liquid crystal was injected into an ITO-equipped glass base plate liquid crystal cell (KSSZ-05/B107MINX05 manufactured by EHC. Co., Ltd.). Using a liquid crystal physical property evaluation system (6245 manufactured by TOYO Corporation), an initial voltage of AC 5 V was applied to the liquid crystal cell at 25°C for 64 µs, and a value (voltage holding ratio) obtained by multiplying a voltage ratio before and after a frame time of 16.7 ms by 100 was calculated. The higher the voltage holding ratio, the less likely the liquid crystal is to be contaminated, and the voltage holding ratios are described as the liquid crystal non-contaminating property in tables.

### <Alignment disorder under harsh wet heat environment>

Using a dispenser (SHOTMASTER manufactured by Musashi Engineering, Inc.), each curable resin composition produced in Examples and Comparative Examples was applied in a rectangular frame shape of 35 mm × 40 mm (line width: 1 mm) onto a 40 mm × 45 mm glass base plate (RT-DM88-PIN manufactured by EHC. Co., Ltd.) on which a transparent electrode and an alignment film were placed in this order on glass, and a liquid crystal (MLC-11900-000 manufactured by Merck Corporation) was dropped inside the curable resin composition drawn on the frame. Then, the glass base plate and the opposing glass base plate were bonded together under reduced pressure, and this was left to stand at 25°C for 1 hour. Ultraviolet irradiation (1,000 mJ/cm²) was performed using a high-pressure mercury-vapor lamp to obtain a liquid crystal panel. The liquid crystal panel produced in the same manner as the above was exposed to a condition of 60°C and 90% RH for 1,000 hours, and then driven at a voltage of AC 5 V in a halftone display state, and the alignment disorder of the liquid crystal in the vicinity of the sealing material including the cured product of the curable resin composition was observed with a polarizing microscope. The shorter the distance at which the alignment disorder has spread from the end of the sealing material, the less likely the alignment disorder is to occur. The distances at which the alignment disorder has spread are described in tables.

⊚: No alignment disorder has spread beyond 0.3 mm from the end of the sealing material.

∘: The alignment disorder has spread beyond 0.3 mm from the end of the sealing material, but the alignment disorder has not spread beyond 0.6 mm.

×: The alignment disorder has spread beyond 0.6 mm from the end of the sealing material.

### <Adhesiveness>

Two ITO films (TETOLIGHT TCF manufactured by OIKE & Co., Ltd., thickness: 125 µm) were prepared, each curable resin composition produced in Examples and Comparative Examples was applied onto the ITO surface of one of the ITO films with an applicator, the other ITO film was bonded so that the ITO surface would be in contact with the curable resin composition, and ultraviolet irradiation (1000 mJ/cm²) was performed using a high-pressure mercury-vapor lamp to obtain a sample in which the cured film was sandwiched between the ITO films (thickness of cured film: 100 µm). The sample was cut into a rectangular shape having a length of 150 mm and a width of 25 mm to obtain an evaluation sample. The obtained sample was placed in an autograph (Autograph AG-IS manufactured by Shimadzu Corporation), and a T-shaped peel test was performed in accordance with JIS K 6854-3 to evaluate adhesiveness (rate of pulling: 10 mm/min). The larger the value, the higher the adhesiveness, and the results are described in tables.

| | |
|---|---|
| ⊚: | 8.0 N/25 mm or more |
| ○: | 4.0 N/25 mm or more and less than 8.0 N/25 mm |
| ×: | less than 4.0 N/25 mm |

### <Impact resistance>

Each evaluation sample prepared in the same manner as in the above adhesiveness evaluation was allowed to stand on a rubber plate having a thickness of 10 cm, a metal ball having a diameter of 38 mm and a mass of 230 g was dropped on the evaluation sample from a height of 10 cm or 20 cm, and the location where the metal ball collided was visually observed to check for lifting and peeling. The higher the height at which lifting and/or peeling occurred, the better the impact resistance, and the results are described in tables.

⊚: Lifting and/or peeling does not occur even when a metal ball is dropped from a height of 20 cm.

∘: Lifting and/or peeling does not occur even when a metal ball is dropped from a height of 10 cm, but lifting and/or peeling occurs with a metal ball dropped from a height of 20 cm.

×: Lifting and/or peeling occurs with a metal ball dropped from a height of 10 cm.

### <Polyfunctional thiol compound (A)>

A-1: Dipentaerythritol hexakis(3-mercaptopropionate) [number of thiol groups: 6]
A-2: Pentaerythritol tetrakis(3-mercaptopropionate) [number of thiol groups: 4]
A-3: Tris-[(3-mercaptopropionyloxy)-ethyl]-isocyanurate [number of thiol groups: 3]

### <Synthesis of polyfunctional urethane (meth)acrylate (B) >

### [Synthesis of polyol compound (b-1)]

Into a reaction vessel equipped with a stirrer, a fractionating column, a nitrogen inlet tube, and a thermometer, 151.5 parts by mass of pimelic acid and 187.3 parts by mass of diethylene glycol were charged, and the mixture was heated to 140°C and stirred under a nitrogen atmosphere. Thereto was added 0.01 parts by mass of tetrabutyl titanate, and the mixture was heated to 220°C to perform a dehydration reaction. Then, the resulting product was subsequently held at 220°C to perform a dehydration reaction. After 18 hours from the start of the dehydration reaction, the content was cooled to obtain a diol compound (b-1) (weight average molecular weight: 1,000).

### [Synthesis of polyol compound (b-2)]

Into a reaction vessel equipped with a stirrer, a fractionating column, a nitrogen inlet tube, and a thermometer, 150.2 parts by mass of adipic acid and 158.3 parts by mass of 3-methyl-1,5-pentanediol were charged, and the mixture was heated to 140°C and stirred under a nitrogen atmosphere. Thereto was added 0.01 parts by mass of tetrabutyl titanate, and the mixture was heated to 220°C to perform a dehydration reaction. Then, the resulting product was subsequently held at 220°C to perform a dehydration reaction. After 18 hours from the start of the dehydration reaction, the content was cooled to obtain a diol compound (b-2) (weight average molecular weight: 1,500).

### [Synthesis of polyol compound (b-3)]

Into a reaction vessel equipped with a stirrer, a fractionating column, an air condenser, a thermometer, a receiver, and a vacuum apparatus, 160.3 parts by mass of diphenyl carbonate, 234.1 parts by mass of 1,6-hexanediol, and 0.1 parts by mass of tetrabutyl titanate were charged, and the mixture was heated to 100°C under reduced pressure of 10 Torr and stirred for 5 hours. The phenol generated as a by-product was removed by distillation, and the content was cooled to obtain a diol compound (b-3) (weight average molecular weight: 600).

### [Synthesis of urethane (meth)acrylate (B-1)]

Into a reaction vessel equipped with a stirrer, a reflux condenser, a nitrogen inlet tube, and a thermometer, 101.1 parts by mass of the polyol compound (b-1) was charged, and stirring was started. Then, 0.1 parts by mass of dibutyltin laurate and 32.1 parts by mass of isophorone diisocyanate as a diisocyanate were added, the internal temperature was raised to 80°C while attention was paid to heat generation, and then the mixture was stirred for 3 hours while maintaining the temperature. Further, 0.1 parts by mass of methoquinone as a polymerization inhibitor and 24.0 parts by mass of 2-hydroxyethyl acrylate as a (meth)acrylate having a hydroxyl group were added, and the mixture was stirred at 85°C for 2 hours to obtain a urethane (meth)acrylate (B-1) (weight average molecular weight: 3,000).

### [Synthesis of (B-2) to (B-5)]

Polyfunctional urethane (meth)acrylates (B-2) to (B-5) were obtained in the same manner as the above method except that the polyol compound, the diisocyanate compound, and the (meth)acrylate compound having a hydroxyl group in Table 1 were used.

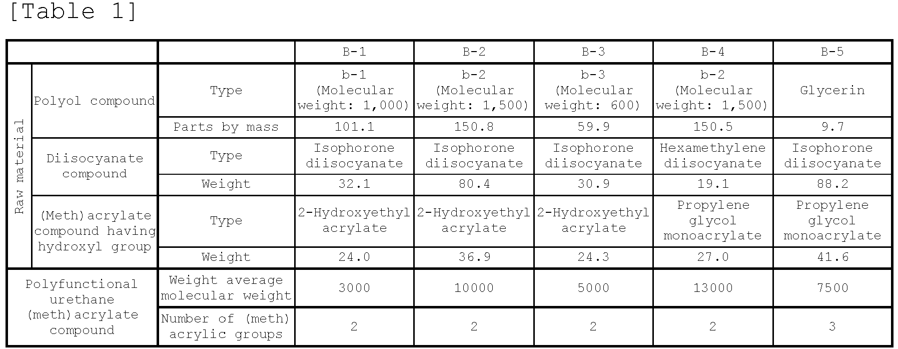

<Polyfunctional (meth)allyl compound (C)>
   C-1: 1,3-Diallyl-5-glycidyl isocyanurate [number of allyl groups: 2]
   C-2: Triallyl isocyanurate [number of allyl groups: 3]
   C-3: Pentaerythritol tetraallyl ether [number of allyl groups: 4]
<Monofunctional (meth)allyl compound (D)>
   D-1: 1-Allyl-3,5-diglycidyl isocyanurate [molecular weight: 281.3]
   D-2: Butyl allyl ether [molecular weight: 114.2]
   D-3: Allyl glycidyl ether [molecular weight: 114.1]
<Monofunctional (meth)acrylic compound (D')>
   D'-1: Lauryl methacrylate
<Photopolymerization initiator (E)>
   E-1: Bis(2,4,6-trimethylbenzoyl)-phenylphosphine oxide
   E-2: 1-Hydroxycyclohexyl phenyl ketone
   E-3: 2,4,6-Trimethylbenzoyl-diphenyl-phosphine oxide
<Spherical filler (F)>
   F-1: AEROSIL RX-200 [average particle diameter: 12 nm, true density: 2.2 g/cm³] silica particles manufactured by Nippon Aerosil Co., Ltd.
   F-2: SE-010T [average particle diameter: 10 µm, true density: 1.2 g/cm³] acrylic particles manufactured by Negami Chemical Industrial Co., Ltd.
   F-3: D-400T [average particle diameter: 15 µm, true density: 1.2 g/cm³] urethane particles manufactured by Negami Chemical Industrial Co., Ltd.

### [Examples 1 to 36 and Comparative Examples 1 to 13]

The above components were added to a planetary mixer in the amounts shown in Tables 2 and 3 below, and mixed and stirred for 2 hours to obtain curable resin compositions. Each evaluation was performed using the curable resin compositions. The results are shown in Table 2-1, Table 2-2, Table 2-3, Table 3-1, and Table 3-2.

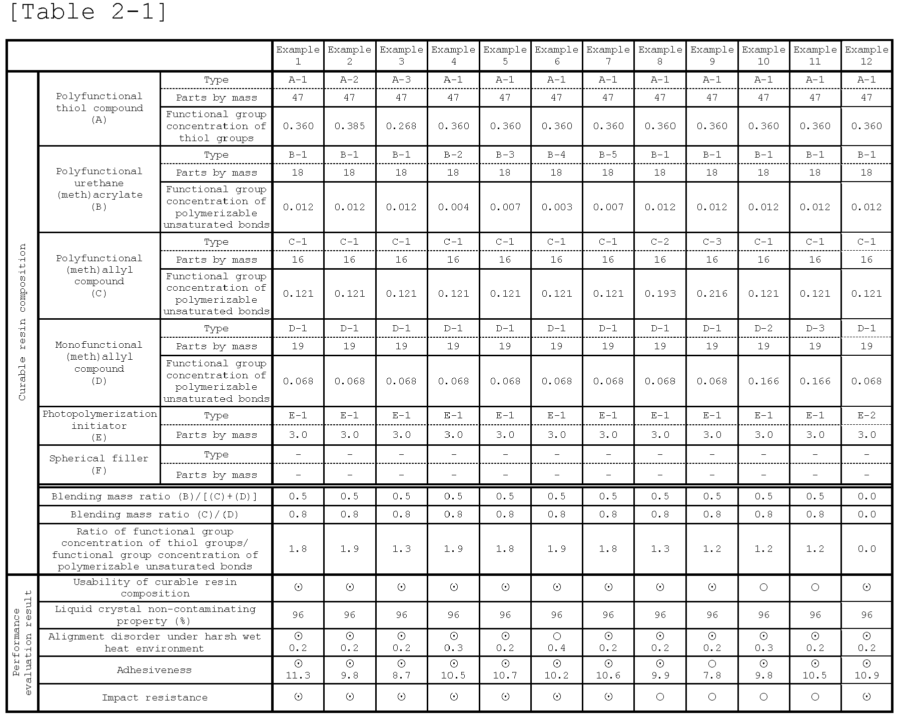

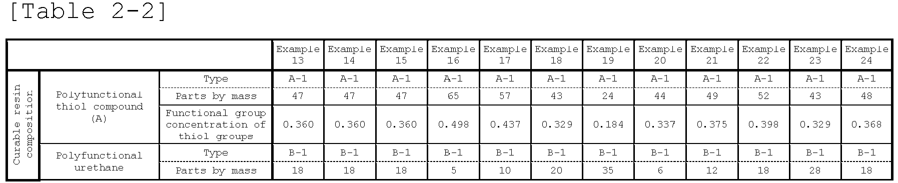

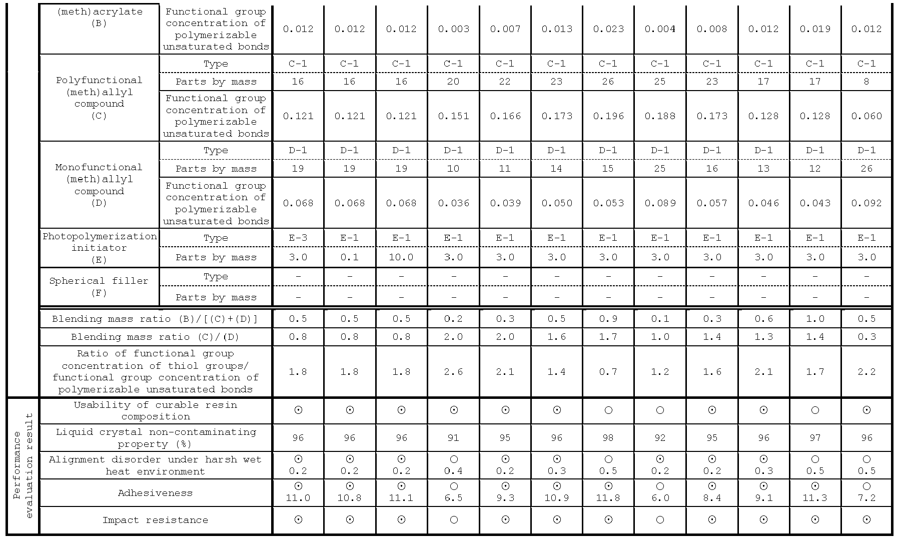

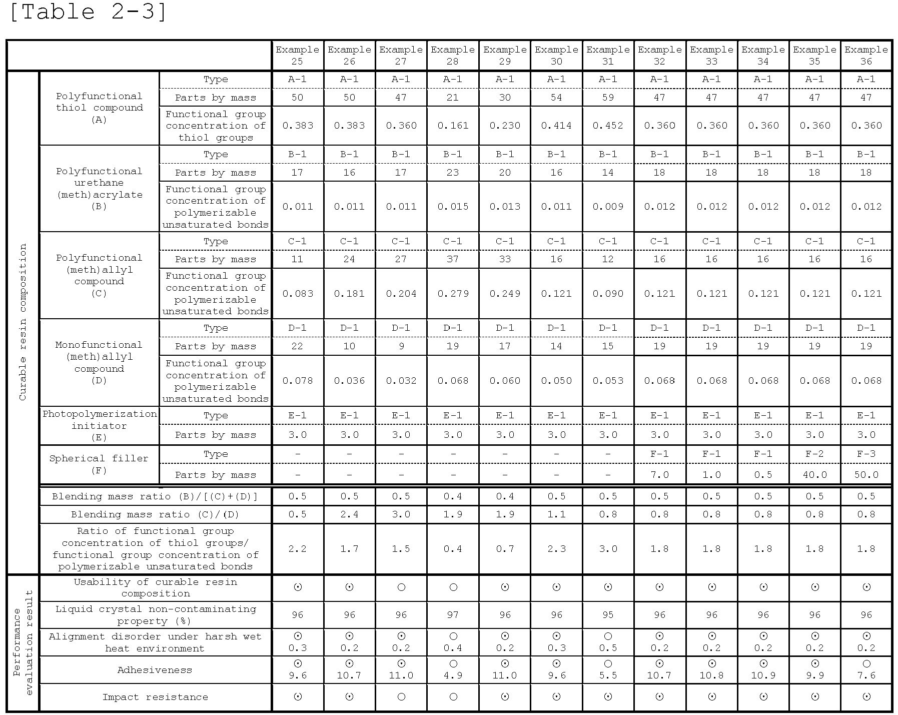

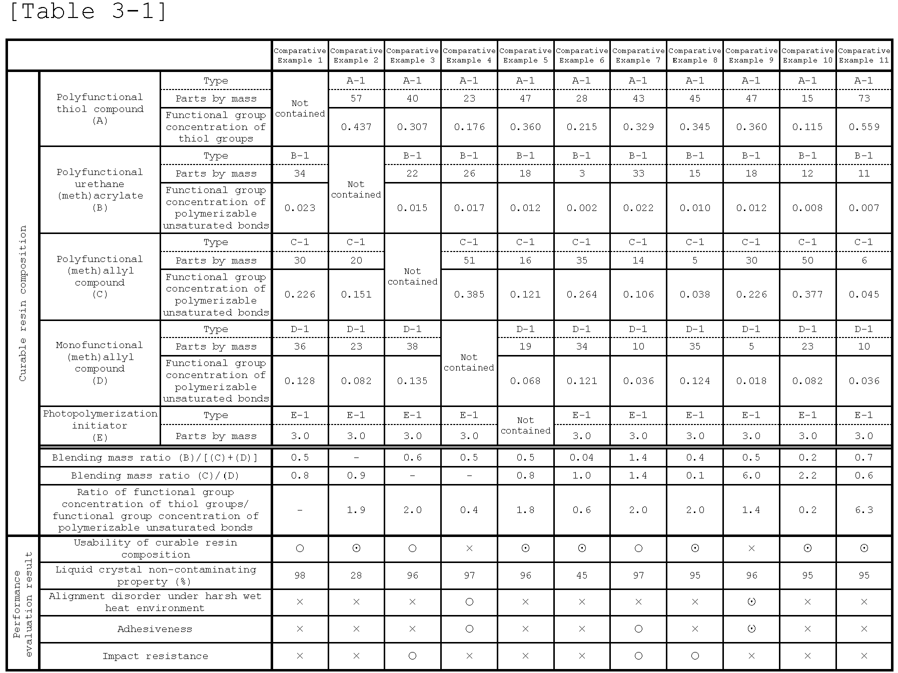

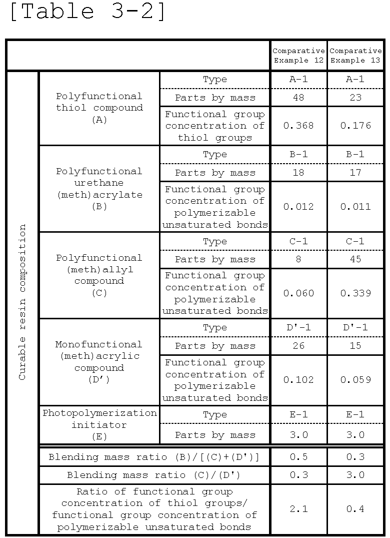

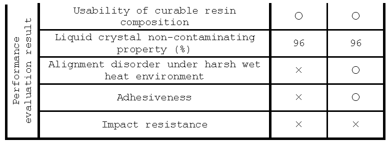

As a result of the above tests, the curable resin composition of each Example was excellent in the usability and the liquid crystal non-contaminating property, did not cause the alignment disorder of the liquid crystal even under harsh wet heat environment after curing, in addition, was excellent in adhesiveness to a film base material, and further had high impact resistance by the components (A) to (E) being contained in appropriate amounts specified in the present invention.

On the other hand, in Comparative Example 1, the curable resin composition did not contain the polyfunctional thiol compound (A), and thus the sealing material for a film liquid crystal panel obtained by curing the curable resin composition caused the alignment disorder of the liquid crystal in the harsh wet heat test, and also had low adhesiveness to a film base material and low impact resistance. In Comparative Example 2, the curable resin composition did not contain the polyfunctional urethane (meth)acrylate compound (B), and thus exhibited a poor liquid crystal non-contaminating property, and the sealing material for a film liquid crystal panel obtained by curing the curable resin composition caused the alignment disorder of the liquid crystal in the harsh wet heat test, and also had low adhesiveness to a film base material and low impact resistance. In Comparative Example 3, the curable resin composition did not contain the polyfunctional (meth)allyl compound (C), and thus the sealing material for a film liquid crystal panel obtained by curing the curable resin composition caused the alignment disorder of the liquid crystal in the harsh wet heat test, and also had low adhesiveness to a film base material. In Comparative Example 4, the curable resin composition did not contain the monofunctional (meth)allyl compound (D), thus the curable resin composition had poor usability, and the sealing material for a film liquid crystal panel obtained by curing the curable resin composition had low impact resistance. In Comparative Example 5, the curable resin composition did not contain the photopolymerization initiator (E), and thus the sealing material for a film liquid crystal panel obtained by curing the curable resin composition caused the alignment disorder of the liquid crystal in the harsh wet heat test, and also had low adhesiveness to a film base material and low impact resistance.

In Comparative Example 6, the blending mass ratio (B)/[(C)+(D)] was smaller than the specified range, thus the curable resin composition had poor liquid crystal non-contaminating property, and the sealing material for a film liquid crystal panel obtained by curing the curable resin composition caused the alignment disorder of the liquid crystal in the harsh wet heat test, and also had low adhesiveness to a film base material and low impact resistance. In Comparative Example 7, the blending mass ratio (B)/[(C)+(D)] was larger than the specified range, and thus the sealing material for a film liquid crystal panel obtained by curing the curable resin composition caused the alignment disorder of the liquid crystal in the harsh wet heat test.

In Comparative Example 8, the blending mass ratio (C)/(D) was smaller than the specified range, and thus the sealing material for a film liquid crystal panel obtained by curing the curable resin composition caused the alignment disorder of the liquid crystal in the harsh wet heat test, and also had low adhesiveness to a film base material. In Comparative Example 9, the blending mass ratio (C)/(D) was larger than the specified range, thus the curable resin composition had poor usability, and the sealing material for a film liquid crystal panel obtained by curing the curable resin composition had low impact resistance.

In Comparative Example 10, the ratio of a functional group concentration of thiol groups of (A) to the sum of a functional group concentration of a polymerizable unsaturated bond of (B), a functional group concentration of a polymerizable unsaturated bond of (C), and a functional group concentration of a polymerizable unsaturated bond of (D) was smaller than the specified range, and thus the sealing material for a film liquid crystal panel obtained by curing the curable resin composition caused the alignment disorder of the liquid crystal in the harsh wet heat test, and also had low adhesiveness to a film base material and low impact resistance. In Comparative Example 11, the ratio of a functional group concentration of thiol groups of (A) to the sum of a functional group concentration of a polymerizable unsaturated bond of (B), a functional group concentration of a polymerizable unsaturated bond of (C), and a functional group concentration of a polymerizable unsaturated bond of (D) was larger than the specified range, and thus the sealing material for a film liquid crystal panel obtained by curing the curable resin composition caused the alignment disorder of the liquid crystal in the harsh wet heat test, and also had low adhesiveness to a film base material and low impact resistance.

In Comparative Example 12 and Comparative Example 13, the monofunctional (meth)acrylic compound was used instead of the monofunctional (meth)allyl compound (D), and thus the sealing material for a film liquid crystal panel obtained by curing the curable resin composition had low impact resistance, in addition, in Comparative Example 12, caused the alignment disorder of the liquid crystal in the harsh wet heat test, and also had low adhesiveness to a film base material.

## Claims

1. A curable resin composition for use in a sealing material for a film liquid crystal panel, comprising:
(A) a polyfunctional thiol compound having 2 to 6 thiol groups;
(B) a polyfunctional urethane (meth)acrylate compound having 2 to 3 (meth)acrylic groups;
(C) a polyfunctional (meth)allyl compound having 2 to 4 (meth)allyl groups;
(D) a monofunctional (meth)allyl compound having one (meth)allyl group; and
(E) a photopolymerization initiator,
wherein a blending mass ratio (B)/[(C)+(D)] of (B) to (C) and (D) is 0.1 to 1.0,
a blending mass ratio (C)/(D) of (C) to (D) is 0.3 to 3.0, and
a ratio of a functional group concentration of thiol groups of (A) to a sum of a functional group concentration of a polymerizable unsaturated bond of (B), a functional group concentration of a polymerizable unsaturated bond of (C), and a functional group concentration of a polymerizable unsaturated bond of (D) (thiol group/polymerizable unsaturated bond) is 0.4 to 3.0.

2. A film liquid crystal panel having an end sealed by the curable resin composition according to claim 1.
